# EUROPÄISCHE PATENTSCHRIFT

(11) **EP 1 138 479 B1**
(45) Veröffentlichungstag und Bekanntmachung des Hinweises auf die Patenterteilung: **11.01.2006**
(21) Anmeldenummer: 01106339.3
(22) Anmeldetag: 16.03.2001
(51) Int. Cl.: B32B 27/34, B32B 27/32

(54) **Transparente, tiefziehfähige und frühsiegelnde Folie mit UV-Sperreigenschaften sowie deren Verwendung als Verpackungsmaterial für Lebensmittel**
Transparent, deepdrawable and easysealable Film with UV barrier properties and its use as food packaging material
Feuille transparente, emboutissable et facilement scellable ayant des propriétés de barrière contre les UV et son utilisation comme emballage alimentaire

(30) Priorität: 29.03.2000 DE 10015660
(43) Veröffentlichungstag der Anmeldung: 04.10.2001
(73) Patentinhaber: Wipak Walsrode GmbH & Co. KG, 29656 Walsrode (DE)
(72) Erfinder: Eggers, Holger, Dr., 79100 Freiburg (DE); Brandt, Rainer, Dr., 29664 Walsrode (DE)
(74) Vertreter: Kutzenberger, Helga

(56) Entgegenhaltungen:
- EP-A- 0 658 310
- EP-A- 0 810 259
- WO-A-98/51747

## Beschreibung

Die vorliegende Erfindung betrifft eine tiefziehfähige Verbundfolie mit hoher Transparenz und guten UV-Sperreigenschaften. Die erfindungsgemäße Folie ist insbesondere für die Verpackung von gegenüber UV-Strahlung empfindlichen Packgütern wie beispielsweise Fleischwaren geeignet, die dem Käufer in einer transparenten und schützenden Verpackung präsentiert werden. Die Erfindung umfasst somit auch die Verwendung der Verbundfolie zur Verpackung von Lebensmitteln.

Viele Lebensmittel unterliegen einem durch UV-Strahlung induzierten Verderb. Beispielhaft sind hier etwa photoinduzierte oxidative Vorgänge in Fleischwaren zu nennen. Dieser Verderbmechanismus tritt etwa bei einer Lagerung in Kühltheken auf. Hier werden in vielen Fällen aus Kostengründen Lichtquellen verwendet, die auch im UV-Spektrum abstrahlen.

Auf diese Weise kann es bei Verpackungen, die keinen UV-Schutz gewährleisten, zu einer erheblichen Verkürzung der im folgenden auch als "Shelf Life" bezeichneten Lagerzeit in der Theke kommen. Hier besteht ein Bedarf an Verpackungen, die einer solchen Verkürzung des Shelf Life entgegenwirken, d.h. an Folien, die im Bereich der ultravioletten Strahlung eine Absorptionswirkung entfalten.

Wegen der besseren Applizierbarkeit des Füllgutes werden für Fleischwaren in den meisten Fällen Deckelverpackungen bestehend aus einer tiefgezogenen Mulde und einem Deckel eingesetzt. Beide Komponenten müssen zum Schutz des Füllguts gegenüber photooxidativem Verderb über eine hohe UV-Barriere verfügen. Die Folien müssen überdies eine gute Transparenz aufweisen, um dem Verbraucher den Blick auf das dargebotene Produkt zu ermöglichen und dieses möglichst attraktiv präsentieren zu können.

Für die Muldenfolie ist ferner eine gute Tiefziehbarkeit für die Ausformung der Mulde erforderlich. Unter Tiefziehfähigkeit wird dabei die Fähigkeit einer Folie verstanden, durch Einwirkung von Wärme und mechanischer Kraft bzw. Druck bleibend eine konturierte Form anzunehmen. Ein Maß für die Tiefziehbarkeit ist im Zusammenhang mit den erfindungsgemäßen Beispielen und den Vergleichsbeispielen angegeben.

Die Ausführung von entsprechenden Folien nach dem Stand der Technik wird im folgenden dargestellt. Für diese und alle weiteren Darlegungen gelten die folgenden Übereinkünfte.
- Für die Beschreibung der in den einzelnen Schichten enthaltenen Polymere werden, wenn nicht anderweitig kenntlich gemacht, Kurzzeichen für Kunststoffe nach DIN 7728 bzw. ISO 1043-1987 (E) verwendet.
- Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch doppelte Schrägstriche, wiedergegeben. Die Seite der Siegelschicht ist dabei stets rechts. Dabei kann auch nur ein Teil der gesamten, den Aufbau ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Gleichartige Polymere können durch eine Nummerierung voneinander unterschieden werden, beispielsweise in der Form PE-LD-1//PE-LD-2//PE-LD-3. Mischungen aus unterschiedlichen Polymeren werden durch das Kennzeichen + sowie die Zusammenfassung der Komponenten in Klammem, ( ), kenntlich gemacht. Gegebenenfalls können hier zusätzlich Angaben zur prozentualen Zusammensetzung gemacht werden. Wenn nicht anders angegeben handelt es sich in solchen Fällen stets um Gewichtsanteile, die auf das Gesamtgewicht der Mischung bezogen sind. So beschreibt beispielsweise der Ausdruck ...//PA//E/VOH//...//(PE-LD-1+PE-LLD)//d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (E/VOH) bestehenden Schicht, gefolgt von einer nicht spezifizierten Schicht oder Schichtenfolge, gefolgt von einer Schicht, die eine Mischung aus einem mit der Nummer 1 versehenem Polyethylen niedriger Dichte (PE-LD-1) und einem Ethylen/α-Olefin-Copolymerisat (PE-LLD) umfasst, sowie einer mit d näher zu spezifizierenden, auf der Siegelseite folgenden Schicht.
- Schichten, die primär der mechanischen Verbindung der beidseitig an sie angrenzenden Schichten dienen, werden im folgenden durch ...//HV//... bezeichnet, wobei HV als Abkürzung für Haftvermittler dient. Typische als Haftvermittler verwendete Polymere werden weiter unten beschrieben.
- Die Angabe von Schmelzpunkten bezieht sich im folgenden auf den nach ASTM 3418 mit DSC-Analyse (Differential Scanning Calorimetry Analyse) bestimmten Wert.
- Die Angabe von Schmelzflussraten bezieht sich im folgenden auf den nach DIN ISO 1133 bestimmten Wert. Erfolgen keine weiteren Angaben, wird als Messbedingung in Form der Temperatur sowie der Auflagemasse Bedingung D in DIN ISO 1133 mit einer Temperatur von 190°C und einer Auflagemasse von 2,16 kg vorausgesetzt.
- Die Dichte der Rohstoffe bezieht sich auf die Meßmethode entsprechend ISO 1183 (A).

Stand der Technik ist hier seit längerem die Verwendung von Verbundfolien, bestehend aus einer festigkeitsgebenden Schicht oder Schichtenfolge sowie einer Siegelschicht, die im Kontakt mit einer weiteren Siegelschicht durch Verbindung nach Aufschmelzen eine dichte Packung ermöglicht.

Bevorzugte Siegelmaterialien sind dabei wegen des niedrigen Schmelzpunkts dieser Systeme insbesondere bei der Verpackung von wärmeempfindlichen Fleischwaren Polyethylen oder Copolymerisate auf Basis von Ethylen und anderen Comonomeren. Auf Polypropylen oder propylenbasierenden Copolymerisaten aufbauende Siegelmedien sind wegen der hohen Siegeltemperaturen hier nicht geeignet.

Für die Verpackung von verderblichen Lebensmitteln werden wegen des ausgewogenen Eigenschaftsbildes aus Tiefziehbarkeit, Zähigkeit und Temperaturbeständigkeit üblicherweise Folien eingesetzt, deren festigkeitsgebende Schicht(en) aus Polyamid bestehen. Hierfür wiederum wird üblicherweise Polyamid 6 verwendet.

Für die hier vorliegende Anforderung ist wegen des guten Eigenschaftsbildes die Verwendung von einer Polyamid enthaltenden Folie erwünscht.

Aufbauten nach dem Stand der Technik sind beispielsweise in *The Wiley Encyclopedia of Packaging Technology* (Hrg. M. Bakker, D. Eckroth; John Wiley & Sons, 1986) sowie in *Nentwig* (Joachim Nentwig: Kunststoff-Folien, Carl Hanser Verlag 1994, München) niedergelegt.

Eine Barriere gegen UV-Strahlung lässt sich dabei neben der Verwendung von organischen UV-Absorbern auch durch feste Füllstoffe erreichen. Letztere sind aus organoleptischen Gründen organischen Systemen vorzuziehen. Die festen Füllstoffe müssen jedoch, um die Transparenz der Folien nicht zu stark zu beeinträchtigen, in genügend feindisperser Form vorliegen, dürfen jedoch, um die gewünschte Wechselwirkung mit UV-Strahlung einzugehen, wiederum nicht zu feinteilig sein.

Bekannt ist auch die Verwendung von feinteiligem Titandioxid (TiO₂). So legt US-A 5,391,609 die Verwendung von nanoskaligem TiO₂ im Partikelgrößenbereich von 10 nm bis 50 nm als Zusatz für die Erlangung einer UV-Barriere bei Beibehalt einer ausreichend guten Transparenz offen. Besonders gute Ergebnisse werden mit TiO₂ im Partikelgrößenbereich von 18 nm bis 40 nm erreicht. Diese Systeme werden in Polypropylen sowie Ethylen/Propylen-Copolymerisaten beschrieben.

In der Praxis erweisen sich polypropylenbasierende Folien jedoch, wie oben dargestellt, als in der Durchstichfestigkeit gegenüber Polyamid und im Siegelbeginn gegenüber Ethylen-Copolymerisaten bzw. Polyethylen deutlich unterlegen. Insofern kann für die vorliegende Anforderung von der in US-A 5,391,609 beschriebenen Lehre kein Gebrauch gemacht werden.

Es stellte sich die Aufgabe, eine Folie bereitzustellen, die neben einem guten UV-Absorptionsvermögen eine hohe Transparenz aufweist und über eine gute Tiefziehfähigkeit bei hoher mechanischer Festigkeit verfügt sowie bei niedrigen Temperaturen versiegelbar ist.
Gegenstand der Erfindung ist eine mehrschichtige Folie aus a) wenigstens einer Schicht (i) aus Polyamid und
b) wenigstens einer Schicht (ii) aus Polyethylen oder einem Ethylen-Copolymerisat, enthaltend feinteiliges Titandioxid mit einem Durchmesser der Primärpartikel des Titandioxids zwischen 5 und 30 nm, wobei
c) das in der Einheit [µm x Gew.-%] angegebene über alle Titandioxid enthaltende Schichten (ii) summierte Multiplikationsprodukt aus der Dicke der jeweiligen Schicht (ii) und dem auf das Gesamtgewicht der jeweiligen Schicht (ii) bezogenen Anteil an Titandioxid im Bereich zwischen 5 und 200 liegt, sowie
d) gegebenenfalls einer oder mehreren EVOH-haltigen Schichten.

Bevorzugt betragen die Längen der Primärpartikel des Titandioxid im zahlenmäßig gewichteten Mittel wenigstens das Dreifache ihres Durchmessers und weisen somit ein nadelförmiges Aussehen auf. Besonders bevorzugt betragen die Längen der Primärpartikel des Titandioxid im zahlenmäßig gewichteten Mittel wenigstens das vierfache ihres Durchmesser.

Die mehrschichtige Folie kann mehrere Schichten (ii) enthalten.

In bevorzugter Form enthält die erfindungsgemäße mehrschichtige Folie nur eine Schicht (ii).

Eine ebenfalls bevorzugte Ausführungsform der erfindungsgemäßen mehrschichtigen Folie besteht darin, dass das in der Einheit [µm x Gew.-%] die über alle Titandioxid enthaltenden Schicht(en) (ii) summierte Multiplikationsprodukt aus jeweiliger Schichtdicke und jeweiligem auf das Gesamtgewicht der jeweiligen Schicht bezogenen Anteil des Titandioxid im Bereich zwischen 10 und 100 liegt.

Eine günstige Ausführung der erfindungsgemäßen mehrschichtigen Folie umfasst Titandioxid mit Primärpartikeln, die im zahlengewichteten Mittel einen Durchmesser von nicht unter 7 nm und nicht über 25 nm aufweisen.

Bevorzugt ist eine Ausführung der erfindungsgemäßen mehrschichtigen Folie, in der die Titandioxidpartikeln in der Längsrichtung der Folie orientiert sind.

Um eine übermäßige Versprödung auszuschließen, enthält die erfindungsgemäße mehrschichtige Folie bevorzugt kein Titandioxid in einer polyamidhaltigen Schicht (i).

Die Schicht(en) (ii) enthält in bevorzugter Form Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20 %, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15 %, in noch weiter bevorzugter Form höchstens 8 %, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15 %, in noch weiter bevorzugter Form höchstens 10 %, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein.

Schicht(en) (i) enthält in bevorzugter Form neben Polyamid keine weiteren thermoplastischen Materialien. Das Schicht(en) (i) ausmachende Polyamid enthält in bevorzugter Form jeweils ein Polyamid oder eine Mischung aus verschiedenen Polyamiden mit wenigstens 90 Gew.-% Polyamid 6 oder ein Copolyamid mit wenigstens 90 Gewichtsprozent aus ε-Caprolactam gebildeter Einheiten. Neben Polyamid 6 können Polyamide ausgewählt aus der Gruppe umfassend Polyamid 10, Polyamid 12, Polyamid 66, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI oder andere aliphatische oder aromatische Homo- und Copolyamide oder Mischungen daraus verwendet werden. Als besonders günstig erweist es sich in Schicht(en) (i) neben Polyamid 6 kein weiteres Polyamid zu verwenden.

Die erfindungsgemäße Mehrschichtfolie kann zusätzlich zu Schicht(en) (i) und Schicht(en) (ii) auch eine oder mehrere EVOH-haltige Schichten (EVOH = Ethylen/Vinylalkohol-Copolymerisat) zur Verbesserung der Sauerstoffsperreigenschaften enthalten, wobei die EVOH-haltigen Schichten bevorzugt wenigstens 50 Gew.%, bezogen auf das Gesamtgewicht der jeweiligen EVOH-haltigen Schicht, eines EVOH mit wenigstens 85 und höchstens 40 Mol-% Vinylacetat, das zu wenigstens 90% verseift ist, enthalten. In einer besonders bevorzugten Form ist eine EVOH-haltige Schicht zwischen zwei polyamidhaltigen Schichten (i) plaziert.

Die erfindungsgemäße Folie kann zusätzlich zu Schicht(en) (i) und Schicht(en) (ii) und gegebenenfalls einer oder mehreren EVOH-haltigen Schicht(en) eine oder mehrere haftvermittelnde Schichten enthalten. Eine solche haftvermittelnde Schicht ist bevorzugt ein Kaschierklebstoff auf Basis von Polyurethanen oder Polyesterurethanen oder ein extrudierbarer Haftvermittler.

Zusätzlich zu Schicht(en) (i) und Schicht(en) (ii) und gegebenenfalls einer oder mehreren EVOH-haltigen Schicht(en) und/oder gegebenenfalls einer oder mehrerer haftvermittelnder Schicht(en) kann die erfindungsgemäße Mehrschichtfolie noch weitere polymere Schichten enthalten.

Die erfindungsgemäße Mehrschichtfolie lässt sich auf üblichen Anlagen zur Herstellung von Mehrschichtfolien durch Coextrusion und/oder Laminierung herstellen.

Bevorzugt ist eine Einarbeitung des Titandioxids in Schicht(en) (ii) über ein üblicherweise auch als Masterbatch bezeichnetes Konzentrat durch Zugabe des Masterbatchs zu einem weiteren Polymer und den gemeinsamen Aufschluss zu einer Schmelze in einem Exkruder.

Die erfindungsgemäße Folie zeigt eine gute Absorption von ultraviolettem Licht schon bis hinauf auf eine Wellenlänge um 350 nm. Dennoch wird die Transparenz der Folie nicht nachhaltig störend beeinträchtigt.

Als überraschend erwies sich die gute Dehnbarkeit bzw. Tiefziehfähigkeit und die hohe Zähigkeit der erfindungsgemäßen Folie gegenüber einer Folie mit titandioxidgefüllter Polyamidschicht. Letztere erweist sich bei gleicher Titandioxidbeladung als erheblich versprödet und nicht mehr plastisch deformierbar.

Trotz der modifizierten Siegelschicht verfügt die erfindungsgemäße Mehrschichtfolie über eine feste, schon bei niedrigen Temperaturen erreichbare, Versiegelung.

Ein weiterer Gegenstand der Erfindung ist die Verwendung der erfindungsgemäßen Folie als Verpackungsmaterial für Lebensmittel.

### Beispiele

### Vergleichsbeispiel 1:

Eine Folie des Aufbaus PA6//Kaschierkleber//(50% PE-LLD + 50% PE-LD-1), wobei die Dicken in der genannten Reihenfolge 50, 2, und 50 µm betragen, wurde durch Kaschierung hergestellt. Das Ethylen/Buten-Copolymerisat (PE-LLD) hat eine Dichte von 919 g/cm³, einen Schmelzpunkt von 124°C sowie einen MFR von 4,4 g/10min bei 190°C und 2,16 kg, das additivfreie PE-LD-1 eine Dichte von 920 g/cm³, einen Schmelzpunkt von 108°C und einen MFR von 1 g/10 min bei 190°C und 2,16 kg. Der Kaschierkleber ist ein polyurethanbasierendes System. PA6 hat einen Kristallitschmelzpunkt von 220°C.

### Vergleichsbeispiel 2:

Folie wie in Vergleichsbeispiel 1, jedoch enthaltend 0,4 Gew.-% Titandioxid im PA6. Das Titandioxid wurde mittels eines auf PA 6/IPDI basierenden Masterbatches eingearbeitet, welches 10 Gew.% Titandioxid enthält.

### Vergleichsbeispiel 3:

Folie wie in Vergleichsbeispiel 1, jedoch enthaltend 1,0 Gew.-% des Titandioxids aus Vergleichsbeispiel 2 im PA6. Das Titandioxid wurde wie in Vergleichsbeispiel 2 mittels eines auf PA 6/IPDI basierenden Masterbatches eingearbeitet, welches 10 Gew.-% Titandioxid enthält.

### Beispiel 4:

Folie wie in Vergleichsbeispiel 1, jedoch enthaltend (50% PE-LLD + 48% PE-LD-1 + 2% PE-LD-2 mit Titandioxid) als Siegelschicht. Das verwendete Titandioxid liegt nadelförmig vor, die Primärpartikeln haben einen mittleren Durchmesser von 15 nm sowie eine mittlere Länge von 70 nm. Das Titandioxid wurde mittels eines LDPEbasierenden Masterbatches PE-LD-2 eingearbeitet, welches 20 Gew.-% Titandioxid enthält. Somit enthält die PE-Schicht 0,4 Gew.-% Titandioxid.

### Beispiel 5:

Folie wie in Beispiel 4, jedoch enthaltend (50% PE-LLD + 49% PE-LD-1 + 5% PE-LD-2 mit Titandioxid) als Siegelschicht. Das Titandioxid wurde mittels des LDPEbasierenden Masterbatches PE-LD-2 aus Beispiel 4 eingearbeitet, welches 20 Gew.-% Titandioxid enthält. Somit enthält die PE-Schicht 1 Gew.-% Titandioxid.

An den beispielhaften erfindungsgemäßen Folien sowie an den Vergleichsbeispielen wurden die folgenden Eigenschaften gemessen:
- die Reißdehnung nach DIN EN ISO 527 bei einer Temperatur von 23°C und einer relativen Feuchte von 50 %. Dabei wurde das Muster 48 Stunden vor der Messung im Messklima konditioniert.
- Die Trübung nach ASTM D 1003.
- Die Lichtdurchlässigkeit bei 300 nm mit einem Einstrahl-Spektralphotometer (Zeiss PMQ II) mit Quarz-Doppelmonochromator.

Die Ergebnisse sind in untenstehender Tabelle zusammengefasst:

| Merkmal | Einheit | Beispiel (B) bzw. Vergleichsbeispiel (V) | | | | |
|---|---|---|---|---|---|---|
| | | V1 | V2 | V3 | B4 | B5 |
| Anteil TiO₂ | µm Gew.-% | 0 | 20 | 50 | 20 | 50 |
| TiO₂-enthaltende Schicht | Kürzel | - | PA | PA | PE | PE |
| Reißdehnung längs | % | 430 | 10 | 50 | 410 | 450 |
| Transmission bei 300 nm | % | 83 | 23 | < 1 | 20 | < 1 |
| Trübung | % | 13 | 18 | 28 | 17 | 26 |

## Patentansprüche

1. Siegelbare, tiefziehfähige Mehrschichtfolie aus
a) wenigstens einer Schicht (i) aus Polyamid und
b) wenigstens einer Schicht (ii) aus Polyethylen oder einem EthylenCopolymerisat, enthaltend feinteiliges Titandioxid mit einem Durchmesser der Primärpartikel des Titandioxids zwischen 5 und 30 nm, wobei
c) das in der Einheit [µm x Gew.%] angegebene über alle Titandioxid enthaltende Schichten (ii) summierte Multiplikationsprodukt aus der Dicke der jeweiligen Schicht (ii) und dem auf das Gesamtgewicht der jeweiligen Schicht (ii) bezogenen Anteil an Titandioxid im Bereich zwischen 5 und 200 liegt, sowie
d) gegebenenfalls einer oder mehreren EVOH-haltigen und/oder haftvermittelnden Schichten.

2. Folie nach Anspruch 1, **dadurch gekennzeichnet, dass** die Längen der Primärpartikel des Titandioxids wenigstens das dreifache ihres Durchmessers betragen.

3. Mehrschichtige Folie nach Anspruch 1 bis 2, **dadurch gekennzeichnet, dass** sie nur eine Schicht (ii) enthält.

4. Mehrschichtige Folie nach Anspruch 1 bis 3, **dadurch gekennzeichnet, dass** das in der Einheit [µm x Gew.-%] angegebene über alle Titandioxid enthaltenden Schicht(en) (ii) summierte Multiplikationsprodukt aus der jeweiligen Dicke der jeweiligen Schicht (ii) und den jeweiligen auf das Gesamtgewicht der jeweiligen Schicht (ii) bezogenen Anteil an Titandioxid im Bereich zwischen 10 und 100 liegt.

5. Mehrschichtige Folie nach Anspruch 1 bis 4, **dadurch gekennzeichnet, dass** der Durchmesser der Primärpartikel des Titandioxids im Bereich zwischen 7 und 25 nm liegt.

6. Mehrschichtige Folie nach Anspruch 1 bis 5, **dadurch gekennzeichnet, dass** die Längen der Primärpartikel des Titandioxid wenigstens das vierfache ihres Durchmessers betragen.

7. Mehrschichtige Folie nach Anspruch 1 bis 6, **dadurch gekennzeichnet, dass** die Titandioxidpartikeln in der Längsrichtung der Folie orientiert sind.

8. Verwendung einer mehrschichtigen Folie gemäß einem der Ansprüche 1 bis 7 als Verpackungsmaterial von Lebensmitteln.

## Claims

1. Sealable, thermoformable multilayer foil composed
a) of at least one layer (i) composed of polyamide and
b) of at least one layer (ii) composed of polyethylene or of an ethylene copolymer, comprising fine-particle titanium dioxide with a diameter of the primary particles of the titanium dioxide between 5 and 30 nm, where
c) the sum across all of the layers (ii) comprising titanium dioxide, stated in the unit [µm × % by weight] of the multiplication product derived from the thickness of the respective layer (ii) and from the proportion of titanium dioxide based on the total weight of the respective layer (ii), is between 5 and 200, and also
d) if appropriate, of one or more EVOH-containing and/or adhesion-promoting layers.

2. Foil according to Claim 1, **characterized in that** the lengths of the primary particles of the titanium dioxide are at least three times their diameter.

3. Multilayer foil according to Claim 1 or 2, **characterized in that** it comprises only one layer (ii).

4. Multilayer foil according to any of Claims 1 to 3, **characterized in that** the sum across all of the layer(s) (ii) comprising titanium dioxide, stated in the unit [µm × % by weight] of the multiplication product derived from the respective thickness of the respective layer (ii) and from the respective proportion of titanium dioxide based on the total weight of the respective layer (ii), is between 10 and 100.

5. Multilayer foil according to any of Claims 1 to 4, **characterized in that** the diameter of the primary particles of the titanium dioxide is in the range between 7 and 25 nm.

6. Multilayer foil according to any of Claims 1 to 5, **characterized in that** the lengths of the primary particles of the titanium dioxide are at least four times their diameter.

7. Multilayer foil according to any of Claims 1 to 6, **characterized in that** the titanium dioxide particles have been oriented in the longitudinal direction of the foil.

8. Use of a multilayer foil according to any of Claims 1 to 7 as foods- or drinks-packaging material.

## Revendications

1. Film multicouche soudable, apte à l'emboutissage, constitué de
a) au moins une couche (i) de polyamide et
b) au moins une couche (ii) de polyéthylène ou d'un copolymère d'éthylène, contenant du dioxyde de titane finement divisé, ayant un diamètre des particules primaires du dioxyde de titane compris entre 5 et 30 nm,
c) le produit, totalisé pour toutes les couches (ii) contenant du dioxyde de titane, indiqué dans l'unité [µm x % en poids], de la multiplication de l'épaisseur de la couche (ii) respective par la proportion de dioxyde de titane par rapport au poids total de la couche (ii) respective se situant dans la plage comprise entre 5 et 200, ainsi que
d) éventuellement une ou plusieurs couches contenant de l'EVOH et/ou promotrices d'adhérence.

2. Film selon la revendication 1, **caractérisé en ce que** les longueurs des particules primaires du dioxyde de titane représentent au moins le triple de leur diamètre.

3. Film multicouche selon la revendication 1 ou 2, **caractérisé en ce qu'**il ne contient qu'une seule couche (ii).

4. Film multicouche selon l'une quelconque des revendications 1 à 3, **caractérisé en ce que** le produit, totalisé pour toutes les couches (ii) contenant du dioxyde de titane, indiqué dans l'unité [µm x % en poids], de la multiplication de l'épaisseur de la couche (ii) respective par la proportion de dioxyde de titane par rapport au poids total de la couche (ii) respective se situe dans la plage comprise entre 10 et 100,

5. Film multicouche selon l'une quelconque des revendications 1 à 4, **caractérisé en ce que** le diamètre des particules primaires du dioxyde de titane se situe dans la plage comprise entre 7 et 25 nm.

6. Film multicouche selon l'une quelconque des revendications 1 à 5, **caractérisé en ce que** les longueurs des particules primaires du dioxyde de titane représentent au moins le quadruple de leur diamètre.

7. Film multicouche selon l'une quelconque des revendications 1 à 6, **caractérisé en ce que** les particules de dioxyde de titane sont orientées dans le sens de la longueur du film.

8. Utilisation du film multicouche selon l'une quelconque des revendications 1 à 7, en tant que matériau d'emballage de produits alimentaires.
